(19) Europäisches Patentamt
European Patent Office
Office européen des brevets

(11) **EP 3 318 057 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **16714440.1**

(22) Anmeldetag: **06.04.2016**

(51) Int Cl.:
***H04N 7/18*** *(2006.01)*

(86) Internationale Anmeldenummer:
**PCT/EP2016/057495**

(87) Internationale Veröffentlichungsnummer:
**WO 2017/001069 (05.01.2017 Gazette 2017/01)**

(54) **DEZENTRAL SYNCHRONISIERTES MULTISENSORSYSTEM**

DECENTRALLY SYNCHRONIZED MULTI-SENSOR SYSTEM

SYSTÈME À CAPTEURS MULTIPLES SYNCHRONISÉ DÉCENTRALISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2015 DE 102015212218**

(43) Veröffentlichungstag der Anmeldung:
**09.05.2018 Patentblatt 2018/19**

(73) Patentinhaber: **Robert Bosch GmbH**
**70442 Stuttgart (DE)**

(72) Erfinder:
- **CHRISTL, Andreas**
  **74321 Bietigheim-Bissingen (DE)**
- **UISCHNER, Danny**
  **71277 Rutesheim (DE)**
- **DURAN, Ibrahim**
  **71069 Sindelfingen (DE)**

(56) Entgegenhaltungen:
**DE-A1-102013 202 320     US-A1- 2006 204 038**

## Beschreibung

Stand der Technik

Die Erfindung betrifft ein Multisensorsystem für ein Fahrzeug zur Ermittlung verschiedener Sensordaten.

Aus dem Stand der Technik sind Sensorsysteme bekannt, die beispielsweise aus mehreren Kameras bestehen, die zeitlich synchronisierte Bilder erstellen sollen. In US 2006/0204038 wird ein entsprechendes System vorgestellt, bei welchem Bilder von zwei Kameras aufgezeichnet werden. Die Zeitinformation der Bilder wird hierbei mittels einer zentralen Uhr bereitgestellt.

In US 2011/0187861 wird ein Kamerasystem beschrieben, welches Bilder aufzeichnet, sobald über einen Beschleunigungssensor ein Stoß detektiert wird. Die aufgezeichneten Bilder werden mit einer Zeitinformation mittels einer im System verbauten Uhr versehen. Diese Uhrzeit der verbauten Uhr wird über periodisch empfangene Radio-Signale automatisch korrigiert.

DE102013202320 bezieht sich auf die Zeitsynchronisation der Sensoren in einem Multisensorsystem unter Verwendung einer Zentraleinheit zum Übertragen eines Synchronisationssignals.

Offenbarung der Erfindung

Das erfindungsgemäße Multisensorsystem für ein Fahrzeug besteht aus wenigstens zwei Sensoreinheiten. Der Kern der Erfindung liegt darin, dass die Sensoreinheiten jeweils wenigstens einen Sensor, eine interne Uhr und eine Steuereinheit umfassen. Die Steuereinheit ist dazu ausgebildet, Messzeitpunkte des wenigstens einen Sensors auf Basis der Uhrzeit der internen Uhr anzupassen. Zudem ist sie in der Lage, ein Synchronisationssignal zu empfangen und basierend auf diesem Synchronisationssignal, die interne Uhr zu synchronisieren.

Durch diese Dezentralisierung ergeben sich mehrere Vorteile. Zum einen ist keine zentrale Steuerungseinheit mehr nötig, die die Synchronisation steuert, die Messzeitpunkte der unterschiedlichen Sensoreinheiten überwacht und gegebenenfalls vorhandene Abweichungen korrigiert. Zudem müssen keine separaten Steuersignale über die Verbindungsleitungen bzw. Verbindungswege gesendet werden, wodurch der Datenfluss niedriger und die Übertragung fehlerunanfälliger wird. Der dezentrale Steuermechanismus in den Sensoreinheiten bietet zudem den Vorteil, dass auf bereits vorhandene Synchronisationssignale von weiteren synchronisierten Uhren in schon vorhandenen Fahrzeugsystemen zurückgegriffen werden kann.

Abweichungen der Messzeitpunkte einzelner Sensoren von vorgegebenen Zielzeitpunkten können in dem erfindungsgemäßen Multisensorsystem dezentral, direkt in den einzelnen Sensoreinheiten angepasst bzw. korrigiert werden. Da die Korrektur nicht zentral errechnet und verschickt werden muss, ist die Korrektur deutlich schneller und zudem robuster gegenüber Signalausfällen.

Zudem lässt sich das Multisensorsystem problemlos auf eine beliebige Sensoranzahl erweitern, ohne dass aufwändige Hard- oder Softwareänderungen nötig sind, da in den einzelnen Systemen die Zuweisung von Messzeitpunkten zu den entsprechenden Messungen autark funktioniert. Werden einzelne Sensoreinheiten abgeschaltet, so können diese die Messungen der Sensoren nach einem Neustart selbstständig aufgrund ihrer internen Uhr an vorgegebene Zielzeitpunkte anpassen, wobei die Zielzeitpunkte festen Uhrzeiten entsprechen. Feste Uhrzeiten bedeuten hier nicht zwangsweise, dass die Uhrzeiten in einem gängigen Uhrzeitformat, beispielsweise basierend auf Stunden, Minuten und Sekunden angegeben sein müssen. Die Anzahl der Sensoren kann dynamisch während des Betriebs verändert werden, ohne dass eine Konfiguration vor dem Betriebsstart notwendig ist.

Außerdem ist der zeitliche Drift von intern verbauten Uhren im Allgemeinen sehr gering, wodurch die Sensoreinheiten nach einer initialen Synchronisierung sehr robust gegenüber Signalausfällen sind. Unter einem zeitlichen Drift kann dabei eine sich mit der Zeit verändernde Abweichung der vorliegenden Uhrzeit von der wirklichen Uhrzeit verstanden werden.

In einer weiteren Ausführungsform des Multisensorsystems wird das Synchronisationssignal von einer Synchronisationsquelle gesendet, wobei als Synchronisationsquelle wenigstens eine der Sensoreinheiten und/oder ein Steuergerät fungiert/fungieren. Wird ein Steuergerät als Synchronisationsquelle eingesetzt, so muss dieses ebenfalls eine interne Uhr aufweisen.

Dieses Multisensorsystem ist in der Lage, Synchronisationssignale von unterschiedlichen Quellen zu empfangen. So kann die Uhrzeit entweder mittels eines zentralen Steuergeräts synchronisiert werden oder eine der Sensoreinheiten übernimmt diese Aufgabe und dient somit als Sensoreinheit und Synchronisationsquelle. Es können auch mehrere Synchronisationsquellen gewählt werden, die sich beispielsweise zunächst selbst synchronisieren und anschließend beide das abgestimmte Synchronisationssignal aussenden. Je nach verwendetem Synchronisationsverfahren kann das Synchronisationssignal uni- oder bi-direktional sein. Das bedeutet, Signale können entweder nur in eine Richtung oder in beide Richtungen versandt werden.

Unter Synchronisationssignalen werden hierbei Signale verstanden, welche Uhrzeitinformationen übermitteln können. Unterschiedliche Arten der Codierung des Synchronisationssignals sind dabei denkbar.

Beispielweise kann zunächst ein leeres Signal von einem Sender gesendet werden. Die Empfängereinheit setzt zum Zeitpunkt des Empfangs dieses leeren Signals einen Zeitmarker. Mit einem gewissen Zeitversatz wird vom Sender ein weiteres Signal mit einer Uhrzeitinformation gesendet. Diese kann beispielsweise die Uhrzeit zum Zeitpunkt der Aussendung des leeren Signals beinhalten. Die Empfangseinheit empfängt dieses Signal und weist dem Zeitpunkt, an welchem der Zeitmarker gesetzt wurde, die entsprechende Uhrzeit zu. Diese Uhrzeit kann dabei auf der Uhrzeit des Senders des Synchronisationssignals, also der Uhrzeit der Synchronisationsquelle, beruhen, wobei die Uhrzeit aber auch von einer anderen Einheit an die Synchronisationsquelle übermittelt worden sein kann.

Zudem können Synchronisationssignale weitere Informationen beinhalten, wie beispielsweise eine Auskunft über die Herkunft des Signals, Informationen über zwischengeschaltete Empfänger und Sender, über die Position und/oder Abstand der Synchronisationsquelle, über die Signalverzögerung aufgrund der verwendeten Hardware, der Distanz, des Sendeweges oder der Sendeart. Weitere Informationen sind denkbar.

In einer vorteilhaften Ausführung des Multisensorsystems weist dieses eine Auswerteeinheit auf, mittels derer von den Sensoreinheiten erzeugte Daten verarbeitbar sind.

Hierdurch können die Sensorinformationen in einer gemeinsamen Einheit verarbeitet werden und die Daten entsprechend den Anforderungen an das Multisensorsystem ausgewertet werden. In der Auswerteinheit können zudem Algorithmen von Fahrerassistenzfunktionen implementiert werden, welche die Daten des Multisensorsystems verarbeiten.

In einer weiteren Ausführungsform des Multisensorsystems kann das Synchronisationssignal auch von der Auswerteeinheit gesendet werden. In diesem Fall muss die Auswerteeinheit ebenfalls eine interne Uhr aufweisen.

Diese Ausführungsform bietet den Vorteil, dass der Auswerteeinheit mehrere sinnvolle Eigenschaften zugewiesen werden. Sie dient in diesem Fall gleichzeitig als Synchronisationsquelle und Auswerteeinheit für die empfangenen Sensordaten. Aufgrund ihrer internen Uhr ist die Auswerteeinheit somit in der Lage, Zeiten von intern durchgeführten Operationen mit den Messzeitpunkten der Sensordaten zu vergleichen, wobei sichergestellt ist, dass sich die Zeitpunkte auf eine gleiche Zeitbasis, also auf eine zuvor synchronisierte Uhrzeit beziehen.

In einer weiteren Ausführungsform des Multisensorsystems sind alle Sensoreinheiten des Multisensorsystems mittels des gleichen Synchronisationssignals synchronisierbar.

Dies bedeutet, dass technisch die Möglichkeit gegeben sein muss, dass alle Sensoreinheiten die Informationen aus dem Synchronisationssignal empfangen können. Die Übertragung des Synchronisationssignals muss hierbei nicht auf dem gleichen Weg und in identischer Form stattfinden. Es kann beispielsweise eine Umformung des Signals von einem zwischengeschalteten Empfänger und Sender stattgefunden haben. Wird das Synchronisationssignal beispielsweise per Funk von der Synchronisationsquelle ausgesandt, so kann es über eine Zwischenstation auch über eine Kabelleitung an eine weitere Sensoreinheit weitergegeben werden.

In einer weiteren Ausführungsform des Multisensorsystems empfangen alle Sensoreinheiten des Multisensorsystems auf direktem Weg das Synchronisationssignal einer gemeinsamen Synchronisationsquelle.

In dieser Ausführungsform ist das Multisensorsystem so ausgestaltet, dass alle Sensoreinheiten auf direktem Weg das Synchronisationssignal empfangen können, wodurch eine direkte Verbindung mit der Synchronisationsquelle gegeben sein muss. Dies hat den Vorteil, dass die Synchronisationsquelle jeder Sensoreinheit ein individuelles Synchronisierungssignal senden kann. Enthält das Synchronisierungssignale beispielsweise nur Informationen über die Uhrzeit der Synchronisationsquelle und unterscheiden sich die Übertragungszeiten zu den einzelnen Sensoreinheiten, so können Asynchronitäten entstehen. Ist bekannt, dass sich die Übertragungszeiten zu den einzelnen Sensorelementen unterscheiden, so kann die Synchronisationsquelle die Uhrzeitinformation im Synchronisationssignal vor dem Senden individuell an jede Sensoreinheit anpassen. Hierdurch kann der Funktionsumfang der Steuereinheiten in den Sensoreinheiten niedrig gehalten werden, wodurch sich wiederum Kosten bei der Fertigung der Sensoreinheiten einsparen lassen.

In einer weiteren Ausführungsform des Multisensorsystems sind Messungen des wenigstens einen Sensors mit einer vorgegebenen Messfrequenz zu Messzeitpunkten auslösbar, wobei die Messzeitpunkte mittels der Uhrzeit der internen Uhr an vorgegebene Zielzeitpunkte anpassbar sind.

In dieser Ausführungsform werden Messungen mit einer vorgegebenen Messfrequenz ausgelöst. Dazu können die Sensoreinheiten beispielsweise einen Taktgeber aufweisen, der entweder in der Steuereinheit oder als zusätzliches Bauteil in der Sensoreinheit implementiert ist. Durch den Startzeitpunkt und die Messfrequenz ergeben sich entsprechende Messzeitpunkte. Diese Messzeitpunkte müssen nicht zwangsweise mit vorgebenden Zielzeitpunkten übereinstimmen, welche beliebig gewählt werden können. Das Multisensorsystem bzw. die einzelnen Sensoreinheiten sind hierbei jedoch so ausgestaltet, dass mittels der internen Uhr die Messzeitpunkte an vorgegebene Zielzeitpunkte angepasst werden können. Diese Anpassung wäre ohne eine interne Uhr nur mit Hilfe eines von einer externen Quelle gesendeten Signals möglich.

In einer bevorzugten Ausführungsform des Multisensorsystems umfasst wenigstens eine Sensoreinheit einen bildgebenden Sensor.

Durch die Verwendung eines bildgebenden Sensors in einer Sensoreinheit des Multisensorsystems ist dieses in der Lage, Bilder aufzunehmen und mit einer Zeitinformation zu versehen. Werden mehrere bildgebende Sensoren verwendet, können die Messdaten der Sensoren gemeinsam verarbeitet werden und mit der zusätzlichen Zeitinformation, weitere Informationen aus den Messdaten gewonnen werden. So können annähernd zeitgleich aufgenommene Bilder von Sensoren mit unterschiedlichen Sichtfeldern zusammengefügt werden, um ein Panoramabild oder eine 360°-Ansicht der Umgebung des Fahrzeugs zu erzeugen. Bei genauer Kenntnis der Aufnahmezeitpunkte können beispielsweise Überlappungsbereiche mehrerer bildgebender Sensoren richtig interpretiert werden und dadurch exakte Verknüpfungen der Bilder durchgeführt werden.

Erfindungsgemäß wird außerdem ein Verfahren für ein Multisensorsystem für ein Fahrzeug vorgestellt, welches aus wenigstens zwei Sensoreinheiten besteht. Die Sensoreinheiten umfassen jeweils wenigstens einen Sensor, eine interne Uhr und eine Steuereinheit. Die Steuereinheit ist dazu ausgebildet, Messzeitpunkte des wenigstens einen Sensors auf Basis der Uhrzeit der internen Uhr an vorgegebene Zielzeitpunkte anzupassen, und ein Synchronisationssignal zu empfangen, und - basierend auf diesem Synchronisationssignal - die interne Uhr zu synchronisieren.

Das erfindungsgemäße Verfahren beinhaltet folgende Schritte:

- Empfangen des Synchronisationssignals mittels der Steuereinheit.
- Synchronisation der internen Uhr auf Basis der im Synchronisationssignal enthaltenen Informationen mittels der Steuereinheit.
- Anpassen der Messzeitpunkte des wenigstens einen Sensors an die vorgegebenen Zielzeitpunkte auf Basis der Uhrzeit der internen Uhr mittels der Steuereinheit.

Dieses Verfahren kann auf allen Sensoreinheiten des Multisensorsystems angewendet werden. Hierbei kann die Synchronisation zeitgleich oder zeitlich versetzt stattfinden, was dadurch ermöglicht wird, dass die einzelnen Sensoreinheiten aufgrund ihrer dezentralen inneren Uhren ohne zentrale Steuerung in der Lage sind, Messungen zu vorgegebenen Zielzeitpunkten durchzuführen. Die vorgegebenen Zielzeitpunkte können entweder statisch festgelegt oder dynamisch beim Betriebsstart bestimmt werden. Die vorgegebenen Zielzeitpunkte sind in diesem Fall beim Betriebsstart entweder bereits in den Steuereinheiten abgelegt oder werden direkt nach dem Start festgelegt.

Das hier vorgestellte Verfahren bietet den Vorteil, dass auf Basis von vorgegebenen Zielzeitpunkten und der Uhrzeit der internen Uhren der Sensoreinheiten autark in den Sensoreinheiten eine Anpassung der Messzeitpunkte an vorgegebene Zielzeitpunkte vorgenommen werden kann. Hierdurch lassen sich die Sensoreinheiten des Multisensorsystems ohne ein regelmäßiges zentrales Steuersignal, welches Informationen über vorgegebene Zielzeitpunkte erhält oder für eine Auslösung der Messung sorgt, betreiben, wobei eine exakte Synchronisation der Messzeitpunkte der verschiedenen Sensoren in den verschiedenen Sensoreinheiten gewährleistet werden kann. Ein weiterer Vorteil dieses Verfahrens besteht darin, dass die vorgebenden Zielzeitpunkte keinen Beschränkungen unterliegen. Die vorgegebenen Zielzeitpunkte können regelmäßige Abstände haben, was einer Messung mit einer bestimmten Messfrequenz entspricht, sie können aber auch komplett unregelmäßig gewählt werden. Zudem sind die Zeitpunkte beliebig wählbar. Sie können entweder in naher oder in ferner Zukunft liegen. So können Zeitpunkte innerhalb der nächsten Nanosekunden und Zeitpunkte in mehreren Jahren bestimmt werden. Laufen die Uhren der verschiedenen Sensoreinheiten zu dem entsprechenden vorgegebenen Zielzeitpunkt synchron, so kann auf Basis von einmal festgelegten vorgegebenen Zielzeitpunkten eine Aufnahmesynchronisation der unterschiedlichen Sensoren des Multisensorsystems über Jahre hinweg gewährleistet werden.

Werden neue Sensoreinheiten zum vorhandenen Multisensorsystem hinzugefügt, müssen diesen lediglich die gleichen vorgegebenen Zielzeitpunkte mitgeteilt werden. Nach einer einmaligen Synchronisation der internen Uhren und der Anpassung der Messzeitpunkte an die vorgegebenen Zielzeitpunkte werden alle Messungen zu den gleichen Messzeitpunkten durchgeführt.

In einer weiteren Ausführungsform des Verfahrens, erfolgt die Anpassung der Messzeitpunkte an die vorgegebenen Zielzeitpunkte durch eine Auslösung der Messungen des wenigstens einen Sensors über die Steuereinheit. Die Steuereinheit löst hierbei jede Messung des wenigstens einen Sensors mittels der Uhrzeit der internen Uhr zu einem bestimmten Messzeitpunkt aus, wobei die Messzeitpunkte auf die vorgegebenen Zielzeitpunkte gelegt werden.

Der Vorteil dieses Verfahren liegt darin, dass die Messungen direkt an den vorgegebenen Zielzeitpunkten ausgelöst werden. Die Anpassung der Messzeitpunkte findet in diesem Fall dadurch statt, dass die Messzeitpunkte mittels der Uhrzeit der internen Uhr direkt auf die vorgegebenen Zielzeitpunkte gelegt werden. Hierdurch finden die Messungen nach Vorgabe der Zielzeitpunkte immer zum richtigen Zeitpunkt statt, solange die interne Uhr synchron zu den weiteren internen Uhren der anderen Sensoreinheiten läuft.

Dieses Verfahren bietet außerdem den Vorteil, dass kein Taktgeber benötigt wird, welcher die Messungen mit einer bestimmten Frequenz auslöst. Hierdurch kann gewährleistet werden, dass alle Sensordaten exakt an den vorgegebenen Zielzeitpunkten aufgezeichnet werden. Mittels der Uhrensynchronisation können die zeitlichen Abweichungen der Messungen im gesamten Multisensorsystem theoretisch auf den Nanosekundenbereich reduziert werden.

In einer weiteren Ausführungsform des Verfahrens werden die Messungen mit einer vorgegebenen Messfrequenz ausgelöst. Die Anpassung der Messzeitpunkte an die vorgegebenen Zielzeitpunkte wird mit Hilfe der Uhrzeit der internen Uhr vorgenommen.

Der Vorteil dieses Verfahrens liegt darin, dass nicht jede Messung einzeln mit Hilfe eines vorgegebenen Zielzeitpunkts ausgelöst werden muss, wodurch zeitliche Ein- oder Beschränkungen auftreten könnten. Die Messungen werden in diesem Verfahren mit einer bestimmten Messfrequenz durchgeführt, die beispielsweise von einem Taktgeber, z.B. einem Quarz in der Steuereinheit oder separat verbaut, vorgegeben wird. Lediglich die Frequenzen und/oder Anfangszeitpunkte der Messungen werden mittels der Steuereinheit überwacht und gegebenenfalls verändert, sodass die Messzeitpunkte an die vorgegebenen Zielzeitpunkte angepasst werden.

In einer weiteren Ausführung des Verfahrens, bei welchem die Messungen mit einer vorgegebenen Messfrequenz ausgelöst werden, erfolgt die Anpassung der Messzeitpunkte an die vorgegebenen Zielzeitpunkte durch eine Veränderung der Messfrequenz.

Diese Ausführungsform des Verfahrens bietet den Vorteil, dass bei einer mit einer Messfrequenz durchgeführten Messung lediglich ein Parameter, die Frequenz, verändert werden muss, um die Messzeitpunkte an gegebene Zielzeitpunkte anzupassen. Die Änderung der Messfrequenz kann sich hierbei auf eine und/oder mehrere und/oder alle folgende/n Messung/en auswirken. Es ist auch denkbar, dass die Messfrequenz nach jeder Messung neu angepasst wird.

In einer weiteren Ausführung des Verfahrens, bei welchem die Messungen mit einer vorgegebenen Messfrequenz ausgelöst werden, erfolgt die Anpassung der Messzeitpunkte an die vorgegebenen Zielzeitpunkte durch eine zeitliche Verzögerung oder ein zeitliches Vorziehen wenigstens eines Messzeitpunkts.

Dieses Verfahren bietet den Vorteil, dass die durch die Messfrequenz und den Startzeitpunkt der Messungen bestimmten Messzeitpunkte sehr einfach an vorgegebene Zielzeitpunkte angepasst werden können, wenn die Messzeitpunkte und die vorgegebenen Zielzeitpunkte lediglich einen Phasenversatz aufweisen, das heißt, wenn die Messzeitpunkte um eine gewisse Zeit gegenüber den Zielzeitpunkten verschoben sind. Falls durch die Messfrequenz die zeitlichen Abstände der Messungen exakt den zeitlichen Abständen der vorgegebenen Zielzeitpunkte entsprechen, so reicht eine einmalige Anpassung eines Messzeitpunktes an einen vorgegebenen Zielzeitpunkt, wenn davon ausgegangen wird, dass dieser neue Messzeitpunkt als Ausgangspunkte für die weiteren Messungen mittels der Messfrequenz fungiert.

Da im Normalfall Abweichungen zwischen den Abständen der vorgegebenen Zielzeitpunkte und den Abständen der mittels einer Messfrequenz bestimmten Messzeitpunkten vorherrscht, da beispielsweise die Frequenz leichte Schwankungen aufweist oder nicht exakt dem Kehrwert der Abstände der vorgegebenen Zielzeitpunkte entspricht, so muss die Anpassung der Messzeitpunkte an die vorgegebenen Zielzeitpunkte regelmäßig wiederholt werden. Ist die interne Uhr der Sensoreinheit einmal synchronisiert, so kann die Anpassung zu beliebigen Zeiten in der Sensoreinheit mittels der Steuereinheit vorgenommen werden.

Das Verfahren lässt zudem eine Kombination aus den beiden genannten Anpassungsmethoden zu.

Das heißt, die Anpassung der Messzeitpunkte an die vorgegebenen Zielzeitpunkte kann sowohl über eine Anpassung der Messfrequenz, als auch über eine zeitliche Verzögerung oder ein zeitliches Vorziehen wenigstens eines Messpunkts geschehen. Diese Kombination bietet den Vorteil, dass situationsangepasst entschieden werden kann, welche Anpassung zum momentanen Zeitpunkt sinnvoller ist. Stimmen beispielsweise die zeitlichen Abstände der Messzeitpunkte mit den zeitlichen Abständen der vorgegebenen Zielzeitpunkte überein und sind lediglich etwas zeitversetzt, so könnte die Anpassung eines Messzeitpunkts an dieser Stelle einer Anpassung der Messfrequenz vorgezogen werden, da diese bereits gut auf die vorgegebenen Zielzeitpunkte abgestimmt ist. Stimmen hingegen die Abstände nicht exakt überein und laufen mit jeder Messung weiter auseinander, so könnte anstelle eines regelmäßigen zeitlichen Verzögerns oder zeitlichen Vorziehens der Messzeitpunkte die Messfrequenz entsprechend angepasst werden. Damit die Messzeitpunkte nach dem Einstellen der richtigen Frequenz auf den vorgegebenen Zielzeitpunkten liegen, kann beispielweise zusätzlich einmalig ein Messpunkt zeitlich vorgezogen oder zeitlich verzögert werden.

Weitere Einzelheiten, Merkmale, Merkmalskombinationen, Vorteile und Wirkungen auf Basis der Erfindung ergeben sich aus den Unteransprüchen sowie der nachfolgenden Beschreibung der bevorzugten Ausführungsbeispiele der Erfindung und aus den Zeichnungen.

Figuren

Figur 1 zeigt ein beispielhaftes Multisensorsystem mit vier Kameras.

Figur 2 zeigt einen beispielhaften Verfahrensverlauf.

Figur 3 zeigt einen alternativen beispielhaften Verfahrensverlauf.

Ausführungsbeispiel

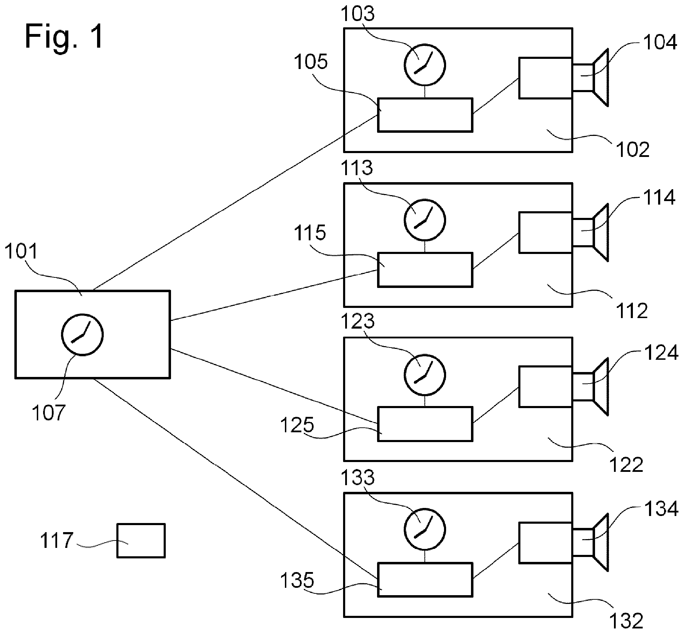

Figur 1 zeigt eine beispielhafte Ausführung des erfindungsgemäßen Multisensorsystems. Das Multisensorsystem besteht aus vier Sensoreinheiten 102, 112, 122, 132 und einer Auswerteeinheit 101. Die Sensoreinheiten 102, 112, 122, 132 umfassen jeweils einen Sensor 104, 114, 124, 134, der im Ausführungsbeispiel durch einen bildgebenden Sensor realisiert ist. Als Sensoren können alternativ auch beliebige im Automotive-Bereich eingesetzte Sensoren verwendet werden, wie Radarsensoren, jegliche Arten von Kameras, Beschleunigungssensoren, Drehratensensoren, Drucksensoren, Körperschallsensoren, Ultraschallsensoren, LIDAR, Laser, Feuchtigkeitssensoren, Gyrosensoren, GPS-Sensoren, Temperatursensoren, CO2 Sensoren, Lambdasonden, Kompasse, Geo-Magnetic-Sensoren und E-Kompasse, wobei diese Liste nicht als vollständig betrachtet werden soll.

Zudem beinhalten die Sensoreinheiten 102, 112, 122, 132 jeweils eine Steuereinheit 105, 115, 125, 135 und eine interne Uhr 103, 113, 123, 133. Die Auswerteeinheit 101 beinhaltet ebenfalls eine interne Uhr 107. Die Auswerteeinheit 101 ist direkt mit den Sensoreinheiten 102, 112, 122, 132 des Multisensorsystems verbunden. Die Verbindung kann mit Kabeln oder kabellos gestaltet werden. Hierbei kommen alle gängigen Übertragungsmethoden in Frage, wie Übertragungen über elektromagnetische Wellen.

Das System soll mittels der bildgebenden Sensorik 104, 114, 124, 134 dazu in der Lage sein, eine Rundumsicht des Fahrzeugs zu generieren. Die Sensoreinheiten 102, 112, 122, 132 sind deshalb derart am und/oder im Fahrzeug angebracht, dass sie für eine Rundumsicht notwendige Sichtfelder aufweisen und die notwendigen Bereiche erfassen. Zudem weisen jeweils zwei benachbarte Sensoren 104, 114, 124, 134 überlappende Bildbereiche auf, sodass die Bildübergänge der aufgezeichneten Bilder die zum Zeitpunkt der Aufnahme vorliegende Szene bestmöglich abbilden.

Für die Erzeugung einer qualitativ hochwertigen Rundumsicht ist das beispielhafte Multisensorsystem dazu in der Lage, die vier benötigten Bilder für die Rundumsicht innerhalb eines Zeitraums von 500 μs aufzuzeichnen. Hierfür muss gewährleistet werden, dass die Messzeitpunkte der unterschiedlichen Sensoren 104, 114, 124, 134 sehr exakt aufeinander abgestimmt sind.

Im Ausführungsbeispiel kommt hierfür ein dezentraler Synchronisationsmechanismus zum Einsatz, welcher weder Triggerleitungen noch eine zentrale Steuereinheit benötigt.

Der Synchronisationsmechanismus besteht aus zwei voneinander getrennten Teilmechanismen. Die Grundidee des Mechanismus ist es, dass alle Sensoren 104, 114, 124, 134 Bilder zu fest vorgegebenen Zielzeitpunkten aufnehmen. Jede Sensoreinheit 102, 112, 122, 132 regelt selbstständig und gänzlich dezentral Ihren Sensor 104, 114, 124, 134 derart, dass die Bildaufnahmen mit diesem vorgegebenen Zielzeitpunkten übereinstimmen. Um dies zu gewährleisten, werden die internen Uhren 103, 113, 123, 133 der Sensoreinheiten 102, 112, 122, 132 mittels eines standardisierten Mechanismus synchronisiert.

Zur Gewährleistung, dass alle Bilder in dem gewünschten Zeitfenster von 500 μs aufgezeichnet werden, wird an dieser Stelle beispielhaft ein Verfahren vorstellt, welches im beispielhaften Multisensorsystem angewendet werden kann. Das Verfahren startet zunächst in Schritt 201.

Im nächsten Schritt 202 werden den einzelnen Sensoreinheiten 102, 112, 122, 132 vorgegebene Zielzeitpunkte vorgegeben. Die Vorgabe der vorgegebenen Zielzeitpunkte kann durch Ablage der vorgegebenen Zielzeitpunkte in einem Speicher der Sensoreinheiten 102, 112, 122, 132 erfolgen. Insbesondere können die vorgegebenen Zielzeitpunkte im Speicher der Steuereinheiten 105, 115, 125, 135 abgelegt sein. Dabei kann die Vorgabe werksseitig, also bei der Fertigung, in den Sensoreinheiten 102, 112, 122, 132 und/oder deren Steuereinheiten 105, 115, 125, 135 erfolgen. Ebenso können Sensoreinheiten 102, 112, 122, 132 im fertigen Zustand programmiert werden. Ebenso denkbar ist eine Programmierung im verbauten Zustand im Fahrzeug, beispielsweise mittels der Auswerteinheit 101 und/oder einem Steuergerät 117. Sollen die Bilder mit einer vorgegebenen Zielfrequenz aufgezeichnet werden, wie es in diesem Ausführungsbeispiel der Fall ist, so können die vorgegebenen Zielzeitpunkte beispielsweise aus der vorgegebenen Zielfrequenz abgeleitet werden.

Die Menge der vorgegebenen Zielzeitpunkte T könnte beispielsweise folgendermaßen definiert werden:

$$T = \left\{ t : t = n * \frac{1}{Zielfrequenz\,[Hz]} \, \forall \, n \, \in \mathbb{N} \right\}$$

Mittels der Zielfrequenz und einem Startpunkt, welcher hier beispielsweise auf 0:00:00 Uhr gelegt wird, ergeben sich so die vorgegebenen Zielzeitpunkte.

Aus technischen Gründen kann es vorkommen, dass die tatsächliche Messfrequenz nicht exakt der vorgegebenen Zielfrequenz entspricht. Hierdurch kommt es bei einer regelmäßigen Auslösung der Messungen mit der Messfrequenz zu Abweichungen von den vorgegebenen Zielzeitpunkten, auch wenn die Messung zeitgleich mit einem der vorgegebenen Zielzeitpunkte gestartet ist.

Auch bei einer Abweichung der tatsächlichen Messzeitpunkte von den vorgegebenen Zielzeitpunkten werden den Messungen Zielzeitpunkte zugewiesen. Als Zielzeitpunkt einer Messung wird dann der vorgegebene Zeitpunkt aus der Menge aller vorgegebenen Zielzeitpunkte gewählt, welcher den kleinsten zeitlichen Abstand zum tatsächlichen Messzeitpunkt der Messung aufweist.

Um die auftretende Abweichung zu korrigieren, werden die internen Uhren 103, 113, 123, 133 der Sensoreinheiten 102, 112, 122, 132 verwendet. Da jede Sensoreinheit 102, 112, 122, 132 und auch die Auswerteeinheit 101 eine separate interne Uhr 103, 113, 123, 133, 107 aufweist, auf deren Basis Berechnungen durchgeführt, bzw. Aufnahmezeitpunkte interpretiert und/oder zugeordnet werden, müssen diese Uhren 103, 113, 123, 133, 107 zunächst synchronisiert werden. Hierdurch werden Asynchronitäten zwischen den einzelnen Komponenten des Multisensorsystems vermieden.

Im Ausführungsbeispiel werden alle Uhren 103, 113, 123, 133, 107 auf Basis der Uhr 107 der Auswerteeinheit 101 synchronisiert, welche dementsprechend Synchronisationssignale an alle Sensoreinheiten 102, 112, 122, 132 sendet. Das Synchronisationssignal kann alternativ auch von einem beliebigen Steuergerät 117 im Fahrzeug kommen oder von einer externen Quelle gesendet werden, beispielsweise über Funk. Die Synchronisation kann auch über Radiowellen oder GPS-Signale erfolgen.

In Schritt 203 empfangen die Sensoreinheiten 102, 112, 122, 132 das Synchronisationssignal der Auswerteeinheit 101. Ein Empfang des Synchronisationssignals erfolgt dabei mittels der Steuereinheiten 105, 115, 125, 135 der Sensoreinheiten 102, 112, 122, 132.

In Schritt 204 werden auf Basis der Uhrzeitinformationen im Synchronisationssignal alle internen Uhren 103, 113, 123, 133 an die entsprechende Uhrzeit der Uhr 107 angepasst, wodurch alle Uhren 103, 113, 123, 133, 107 des Multisensorsystems synchronisiert werden. Die Anpassung kann mittels der Steuereinheiten 105, 115, 125, 135 durchgeführt werden, die mit den internen Uhren 103, 113, 123, 133 gekoppelt sind.

Für die Synchronisation des Multisensorsystems können verschiedene Übertragungsprotokolle verwendet werden. Hierfür kommen standardisierte Protokolle wie beispielsweise NTP (Network Time Protocol) oder PTP (Precision Time Protocol) in Frage oder ähnliche Protokolltypen. In diesem Ausführungsbeispiel stellt die Uhr 107 der Auswerteeinheit 101 die Hauptuhr, auch Grandmasterclock genannt, dar.

Es können in alternativen Ausführungsformen aber auch alle anderen im Multisensorsystem vorhandenen Uhren 103, 113, 123, 133 als Grandmasterclock verwendet werden oder eine weitere Uhr. Es muss ausschließlich gewährleistet sein, dass ein entsprechendes Synchronisationssignal mit den nötigen Informationen zur Synchronisation mit dieser weiteren Uhr von den einzelnen Sensoreinheiten 102, 112, 122, 132 und gegebenenfalls von der Auswerteeinheit 101 des Multisensorsystems empfangen werden kann.

Unabhängig davon, welche Synchronisationsquelle verwendet wird, starten nach der durchgeführten Synchronisation des Multisensorsystems die einzelnen Sensoreinheiten 102, 112, 122, 132 in Schritt 205 ihre Messungen.

Damit die Messzeitpunkte möglichst nah an den vorgegebenen Zielzeitpunkten liegen wird in Schritt 206 geprüft, ob der aktuelle Messzeitpunkt mit dem vorgegebenen Zielzeitpunkt übereinstimmt. Dieser Abgleich muss nicht zwangsweise bei jeder Messung durchgeführt werden, sondern kann auch erst nach einer vorher definierten Anzahl an Messungen erfolgen. Es können auch Anpassungsintervalle definiert werden oder seitens der Steuereinheiten 105, 115, 125, 135 vorgegeben werden.

Kommt die Prüfung zu den Schluss, dass der Messzeitpunkt genügend genau am vorgegebenen Zielzeitpunkt liegt, wobei die maximale Abweichung ebenfalls situationsbedingt und/oder an das Multisensorsystem angepasst definiert werden kann, so springt das Verfahren zu Schritt 210 und führt die nächste Messung, oder gegebenenfalls mehrere weitere Messungen aus. Die von den Sensoren erzeugten Daten, werden entweder direkt nach der Messung oder mit einem gewissen Zeitversatz an die Auswerteeinheit 101 übertragen.

Im Schritt 211 wird anschließend geprüft, ob weitere Sensordaten benötigt werden. Beispielsweise ob eine weitere Rundumsicht erstellt werden soll oder ob derzeit kein Bedarf an weiteren Sensordaten besteht. Soll weiter gemessen werden, so springt das Verfahren gegebenenfalls wieder zurück zu Schritt 206, in welchem wieder geprüft wird, ob der aktuelle Messzeitpunkt genügend genau am vorgegebenen Zielzeitpunkt liegt. Nach wie vielen Messungen erneut die Prüfung der Übereinstimmung der Messpunkte mit den vorgegebenen Zielzeitpunkten erfolgt, kann, wie bereits beschrieben, variieren oder gegebenenfalls auch nur einmalig erfolgen.

Werden keine weiteren Messungen benötigt, beispielsweise, wenn das Fahrzeug abgeschaltet wird, so endet das Verfahren im Schritt 212.

Wird hingegen in Schritt 206 festgestellt, dass der Messzeitpunkt zu weit vom vorgegebenen Zielzeitpunkt abweicht, erfolgt im Schritt 207 eine Analyse des Problems, weswegen eine Abweichung des Messzeitpunktes vom vorgegebenen Zielzeitpunkt vorliegt. Hierfür kann entweder nur der aktuelle Zeitversatz der Messungen betrachtet werden oder es können mehrere Größen in die Analyse einfließen, wie die Abweichungen der vorigen Messzeitpunkten von den vorgegebenen Zielzeitpunkten und/oder die Abweichung der Messfrequenz von der Zielfrequenz.

Je nach Ergebnis der Analyse in Schritt 207 können zwei Methoden zur Anpassung der folgenden Messzeitpunkte an die vorgegebenen Zielzeitpunkte angewendet werden. Wird in Schritt 207 festgestellt, dass die Messfrequenz von der Zielfrequenz abweicht, kann in Schritt 208 die Messfrequenz entsprechend erhöht oder verringert werden. Auch wenn nie die exakte Zielfrequenz eingestellt werden kann, beispielsweise aufgrund der verwendeten Hardware, so kann die Abweichung über eine regelmäßige Anpassung der Frequenz minimiert werden.

Wird in Schritt 207 festgestellt, dass zwar die Messfrequenz sehr nah an der Zielfrequenz liegt, sich jedoch ein kleiner, ggf. regelmäßiger, Zeitversatz zwischen den Messzeitpunkten und den vorgegebenen Zielzeitpunkten eingestellt hat, so kann dies auch in Schritt 208 über eine Anpassung der Messfrequenz ausgeglichen werden. Beispielsweise kann die Frequenz so eingestellt werden, dass die zwei folgenden Messungen mit einer höheren Frequenz durchgeführt werden und anschließend wieder die ursprüngliche, nahe an der Zielfrequenz liegende Messfrequenz eingestellt wird. Hierdurch würde beispielsweise ein zeitliches Vorziehen der Messzeitpunkte umgesetzt werden. Zum Erreichen einer zeitlichen Verzögerung der Messzeitpunkte, könnte man entsprechend kurzzeitig die Messfrequenz verringern.

Alternativ könnte bei gut übereinstimmenden Mess- und Zielfrequenzen und einem vorliegenden Zeitversatz zwischen Messzeitpunkten und vorgegebenen Zielzeitpunkten einfach im Schritt 209 der nächste Messzeitpunkt mittels der Steuereinheit zeitlich vorgezogen oder zeitlich verzögert werden ohne die Frequenz kurzzeitig anzupassen.

Es können auch beide Methoden 208, 209 kombiniert werden und sowohl einzelne Messzeitpunkte verschoben werden, als auch eine Anpassung der Messfrequenz durchgeführt werden. Welche Methoden am sinnvollsten anzuwenden sind, kann abhängig vom Ausgang der Analyse in Schritt 207 entschieden werden.

Nach der erfolgreichen Anpassung der Messzeitpunkte an die vorgegebenen Zielzeitpunkte geht das Verfahren, mit Schritt 210 weiter, in welchem, wie bereits beschrieben, eine oder mehrere Messungen zu den angepassten Messzeitpunkten durchgeführt werden.

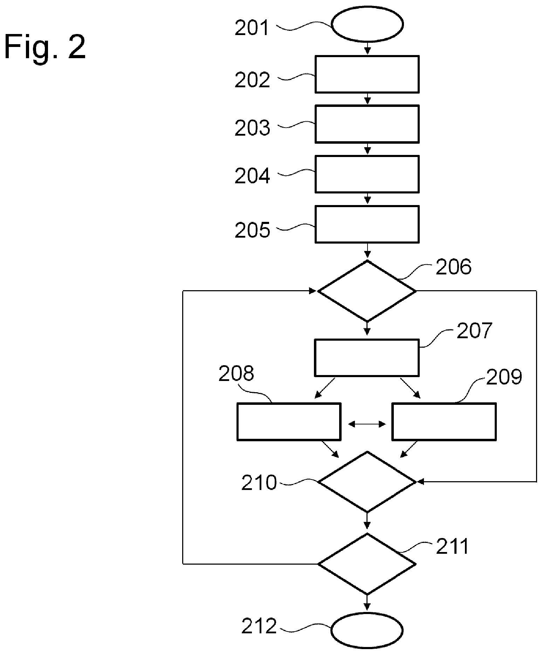

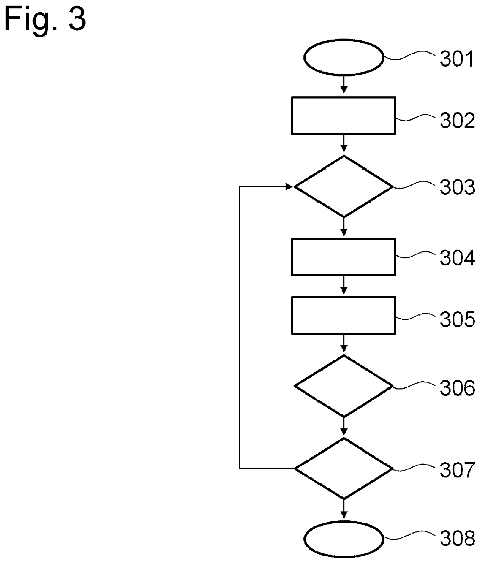

In Figur 3 wird beispielhaft ein vereinfachtes Verfahren zur synchronisierten Aufzeichnung von Sensordaten in einem Multisensorsystem beschrieben. Das Verfahren ähnelt in den Grundzügen dem zuvor vorgestellten Verfahren aus Figur 2. Das Verfahren startet mit Schritt 301. In Schritt 302 werden entsprechend dem Schritt 202 Zielzeitpunkte vorgegeben. Diese können beliebig gewählt werden und müssen keinerlei Regelmäßigkeiten aufweisen.

In Schritt 303 wird, entsprechend dem Schritt 203, das Synchronisationssignal von den Sensoreinheiten 102, 112, 122, 132 empfangen und in Schritt 304 alle Uhren 103, 113, 123, 133, 107 auf Basis der Uhrzeitinformation des Synchronisationssignals synchronisiert.

In Schritt 305 erfolgt die Anpassung der Messzeitpunkte an die vorgegebenen Zielzeitpunkte. In diesem Verfahrensbeispiel erfolgt die Anpassung dadurch, dass die Messzeitpunkte mittels der synchronisierten internen Uhren 103, 113, 123, 133 auf die vorgegebenen Zielzeitpunkte gelegt werden. Das bedeutet, die Steuereinheiten 105, 115, 125, 135 triggern jede einzelne Messung der Sensoren 104, 114, 124, 134 bzw. lösen diese aus.

In Schritt 306 wird eine vorher definierte Anzahl von Messungen von den Steuereinheiten 105, 115, 125, 135 ausgelöst und die entsprechenden Messwerte werden an die Auswerteeinheit 101 gesendet.

In Schritt 307 wird entschieden, ob weitere Messdaten notwendig sind, bzw. vom Multisensorsystem oder einer der Komponenten des Multisensorsystems gefordert werden. Ist dies nicht der Fall, so endet das Verfahren in Schritt 308.

Sollen nach einer vorher bestimmten Anzahl von Messungen oder einer vorgegebenen Zeit weitere Messungen durchgeführt werden, so kann dieses Verfahren im Schritt 307 wieder zu Schritt 303 springen, in welchem erneut ein Synchronisationssignal empfangen wird. Hierdurch werden die einzelnen Sensoreinheiten 102, 112, 122, 132 erneut synchronisiert, wodurch die Messungen der verschiedenen Sensoren 104, 114, 124, 134 des Multisensorsystems in dem vorgegebenen Zeitfenster platziert werden können und eine entsprechend exakte Synchronisation der Bilder möglich ist.

Die erneute Synchronisation der Uhren 103, 113, 123, 133 kann auch zu beliebigen Zeiten oder nahezu kontinuierlich mittels eines kontinuierlichen Synchronisationssignals durchgeführt werden. Auch im Verfahren aus Figur 2 ist eine regelmäßige Synchronisation möglich, die entweder von einer Anzahl an Messungen und/oder in regelmäßigen zeitlichen Abständen und/oder zu beliebigen Zeitpunkten stattfinden kann. Je nach Synchronisationsquelle können diese Zeitpunkte beliebig variieren.

**Patentansprüche**

1. Multisensorsystem für ein Fahrzeug bestehend aus wenigstens zwei Sensoreinheiten (102, 112, 122, 132), **dadurch gekennzeichnet,**
   **dass** die Sensoreinheiten (102, 112, 122, 132) jeweils wenigstens einen Sensor (104, 114, 124, 134), eine interne Uhr (103, 113, 123, 133), und eine Steuereinheit (105, 115, 125, 135) umfassen, wobei die Steuereinheit (105, 115, 125, 135) dazu ausgebildet ist, Messzeitpunkte des wenigstens einen Sensors (104, 114, 124, 134) auf Basis der Uhrzeit der internen Uhr (103, 113, 123, 133) anzupassen, und ein Synchronisationssignal zu empfangen und - basierend auf diesem Synchronisationssignal - die interne Uhr (103, 113, 123, 133) zu synchronisieren.

2. Multisensorsystem nach Anspruch 1, **dadurch gekennzeichnet, dass** das Synchronisationssignal von einer Synchronisationsquelle gesendet wird und als Synchronisationsquelle wenigstens eine der Sensoreinheiten (102, 112, 122, 132) und/oder ein Steuergerät (117) fungiert/fungieren, wobei das Steuergerät (117) eine interne Uhr aufweist.

3. Multisensorsystem nach Anspruch 1, **dadurch gekennzeichnet, dass** das Multisensorsystem eine Auswerteeinheit (101) aufweist, mittels derer von den Sensoreinheiten (102, 112, 122, 132) erzeugte Daten verarbeitbar sind.

4. Multisensorsystem nach Anspruch 3, **dadurch gekennzeichnet, dass** das Synchronisationssignal von der Auswerteeinheit (101) gesendet wird, wobei die Auswerteeinheit (101) eine interne Uhr (107) aufweist.

5. Multisensorsystem nach Anspruch 1, **dadurch gekennzeichnet, dass** alle Sensoreinheiten (102, 112, 122, 132) des Multisensorsystems mittels des gleichen Synchronisationssignals synchronisierbar sind.

6. Multisensorsystem nach Anspruch 1, **dadurch gekennzeichnet, dass** alle Sensoreinheiten (102, 112, 122, 132) des Multisensorsystems auf direktem Weg das Synchronisationssignal einer gemeinsamen Synchronisationsquelle empfangen.

**7.** Multisensorsystem nach Anspruch 1, **dadurch gekennzeichnet, dass** Messungen des wenigstens einen Sensors (104, 114, 124, 134) mit einer vorgegebenen Messfrequenz zu Messzeitpunkten auslösbar sind, wobei die Messzeitpunkte mittels der Uhrzeit der internen Uhr (103, 113, 123, 133) an vorgegebene Zielzeitpunkte anpassbar sind.

**8.** Multisensorsystem nach Anspruch 1, **dadurch gekennzeichnet, dass** wenigstens eine der Sensoreinheiten (102, 112, 122, 132) einen bildgebenden Sensor (104, 114, 124, 134) umfasst.

**9.** Verfahren für ein Multisensorsystem für ein Fahrzeug bestehend aus wenigstens zwei Sensoreinheiten (102, 112, 122, 132), wobei die Sensoreinheiten (102, 112, 122, 132) jeweils wenigstens einen Sensor (104, 114, 124, 134), eine interne Uhr (103, 113, 123, 133) und eine Steuereinheit (105, 115, 125, 135) umfassen, wobei die Steuereinheit (105, 115, 125, 135) dazu ausgebildet ist, Messzeitpunkte des wenigstens einen Sensors (104, 114, 124, 134) auf Basis der Uhrzeit der internen Uhr (103, 113, 123, 133) an vorgegebene Zielzeitpunkte anzupassen, und ein Synchronisationssignal zu empfangen und - basierend auf diesem Synchronisationssignal - die interne Uhr (103, 113, 123, 133) zu synchronisieren, mit den folgenden Schritten:

• Empfangen des Synchronisationssignals mittels der Steuereinheit (105, 115, 125, 135).
• Synchronisation der internen Uhr (103, 113, 123, 133) auf Basis der im Synchronisationssignal enthaltenen Informationen mittels der Steuereinheit (105, 115, 125, 135).
• Anpassen der Messzeitpunkte des wenigstens einen Sensors (104, 114, 124, 134) an die vorgegebenen Zielzeitpunkte auf Basis der Uhrzeit der internen Uhr (103, 113, 123, 133) mittels der Steuereinheit (105, 115, 125, 135).

**10.** Verfahren nach Anspruch 9, **dadurch gekennzeichnet, dass** die Anpassung der Messzeitpunkte an die vorgegebenen Zielzeitpunkte derart erfolgt, dass die Steuereinheit (105, 115, 125, 135) die Messungen zu Messzeitpunkten auslöst, wobei die Messzeitpunkte mittels der Uhrzeit der internen Uhr (103, 113, 123, 133) auf die vorgegebenen Zielzeitpunkte gelegt werden.

**11.** Verfahren nach Anspruch 9, **dadurch gekennzeichnet, dass** die Messungen des wenigstens einen Sensors mit einer vorgegebenen Messfrequenz ausgelöst werden und die Messzeitpunkte mittels der Uhrzeit der internen Uhr (103, 113, 123, 133) an vorgegebene Zielzeitpunkte angepasst werden.

**12.** Verfahren nach Anspruch 11, **dadurch gekennzeichnet, dass** die Anpassung der Messzeitpunkte an die vorgegebenen Zielzeitpunkte durch eine Veränderung der Messfrequenz erfolgt.

**13.** Verfahren nach Anspruch 11 und/oder Anspruch 12, **dadurch gekennzeichnet, dass** die Anpassung der Messzeitpunkte an die vorgegebenen Zielzeitpunkte durch eine zeitliche Verzögerung oder ein zeitliches Vorziehen wenigstens eines Messzeitpunkts erfolgt.

**Claims**

**1.** Multi-sensor system for a vehicle consisting of at least two sensor units (102, 112, 122, 132), **characterized in that** the sensor units (102, 112, 122, 132) each comprise at least one sensor (104, 114, 124, 134), an internal clock (103, 113, 123, 133), and a control unit (105, 115, 125, 135), the control unit (105, 115, 125, 135) being designed to adapt measuring times of the at least one sensor (104, 114, 124, 134) on the basis of the clock time of the internal clock (103, 113, 123, 133), and to receive a synchronization signal and - on the basis of this synchronization signal - synchronize the internal clock (103, 113, 123, 133).

**2.** Multi-sensor system according to Claim 1, **characterized in that** the synchronization signal is sent by a synchronization source and at least one of the sensor units (102, 112, 122, 132) and/or a control device (117) acts/act as the synchronization source, the control device (117) having an internal clock.

**3.** Multi-sensor system according to Claim 1, **characterized in that** the multi-sensor system has an evaluation unit (101), by means of which data generated by the sensor units (102, 112, 122, 132) can be processed.

**4.** Multi-sensor system according to Claim 3, **characterized in that** the synchronization signal is sent by the evaluation unit (101), the evaluation unit (101) having an internal clock (107).

**5.** Multi-sensor system according to Claim 1, **characterized in that** all of the sensor units (102, 112, 122, 132) of the multi-sensor system can be synchronized by means of the same synchronization signal.

**6.** Multi-sensor system according to Claim 1, **characterized in that** all of the sensor units (102, 112, 122, 132) of the multi-sensor system directly receive the synchronization signal of a shared synchronization source.

**7.** Multi-sensor system according to Claim 1, **characterized in that** measurements of the at least one sensor (104, 114, 124, 134) can be triggered with a predetermined measuring frequency at measuring times, the measuring times being adaptable to predetermined target times by means of the clock time of the internal clock (103, 113, 123, 133).

**8.** Multi-sensor system according to Claim 1, **characterized in that** at least one of the sensor units (102, 112, 122, 132) comprises an imaging sensor (104, 114, 124, 134).

**9.** Method for a multi-sensor system for a vehicle consisting of at least two sensor units (102, 112, 122, 132), the sensor units (102, 112, 122, 132) each comprising at least one sensor (104, 114, 124, 134), an internal clock (103, 113, 123, 133), and a control unit (105, 115, 125, 135), the control unit (105, 115, 125, 135) being designed to adapt measuring times of the at least one sensor (104, 114, 124, 134) to predetermined target times on the basis of the clock time of the internal clock (103, 113, 123, 133), and to receive a synchronization signal and - on the basis of this synchronization signal - synchronize the internal clock (103, 113, 123, 133), with the following steps:

• Receiving the synchronization signal by means of the control unit (105, 115, 125, 135).
• Synchronizing the internal clock (103, 113, 123, 133) on the basis of the information contained in the synchronization signal by means of the control unit (105, 115, 125, 135).
• Adapting the measuring times of the at least one sensor (104, 114, 124, 134) to the predetermined target times on the basis of the clock time of the internal clock (103, 113, 123, 133) by means of the control unit (105, 115, 125, 135).

**10.** Method according to Claim 9, **characterized in that** the adaptation of the measuring times to the predetermined target times takes place in such a way that the control unit (105, 115, 125, 135) triggers the measurements at measuring times, the measuring times being set to the predetermined target times by means of the clock time of the internal clock (103, 113, 123, 133) .

**11.** Method according to Claim 9, **characterized in that** the measurements of the at least one sensor are triggered with a predetermined measuring frequency and the measuring times are adapted to predetermined target times by means of the clock time of the internal clock (103, 113, 123, 133).

**12.** Method according to Claim 11, **characterized in that** the adaptation of the measuring times to the predetermined target times takes place by changing the measuring frequency.

**13.** Method according to Claim 11 and/or Claim 12, **characterized in that** the adaptation of the measuring times to the predetermined target times takes place by delaying or bringing forward the time of at least one measuring time.

## Revendications

**1.** Système à capteurs multiples destiné à un véhicule comprenant au moins deux unités de capteurs (102, 112, 122, 132), **caractérisé en ce que** les unités de capteurs (102, 112, 122, 132) comprennent chacune au moins un capteur (104, 114, 124, 134), une horloge interne (103, 113, 123, 133) et une unité de commande (105, 115, 125, 135), l'unité de commande (105, 115, 125, 135) étant conçue pour adapter des instants de mesure de l'au moins un capteur (104, 114, 124, 134) sur la base de l'heure de l'horloge interne (103, 113, 123, 133), et pour recevoir un signal de synchronisation et, sur la base de ce signal de synchronisation, synchroniser l'horloge interne (103, 113, 123, 133).

**2.** Système à capteurs multiples selon la revendication 1, **caractérisé en ce que** le signal de synchronisation est émis par une source de synchronisation et au moins une des unités de capteurs (102, 112, 122, 132) et/ou un appareil de commande (117) fonctionne(nt) comme source de synchronisation, l'appareil de commande (117) comportant une horloge interne.

**3.** Système à capteurs multiples selon la revendication 1, **caractérisé en ce que** le système à capteurs multiples comporte une unité d'évaluation (101) permettant de traiter des données générées par les unités de capteurs (102, 112, 122, 132).

**4.** Système à capteurs multiples selon la revendication 3, **caractérisé en ce que** le signal de synchronisation est émis par l'unité d'évaluation (101), l'unité d'évaluation (101) comportant une horloge interne (107).

**5.** Système à capteurs multiples selon la revendication 1, **caractérisé en ce que** toutes les unités de capteurs (102, 112, 122, 132) du système à capteurs multiples peuvent être synchronisées au moyen du même signal de synchronisation.

**6.** Système à capteurs multiples selon la revendication 1, **caractérisé en ce que** toutes les unités de capteurs (102, 112, 122, 132) du système à capteurs multiples reçoivent directement le signal de synchronisation d'une source de synchronisation commune.

7. Système à capteurs multiples selon la revendication 1, **caractérisé en ce que** des mesures de l'au moins un capteur (104, 114, 124, 134) peuvent être déclenchées à des instants de mesure avec une fréquence de mesure prédéterminée, les instants de mesure pouvant être adaptés à des instants cibles spécifiés au moyen de l'heure de l'horloge interne (103, 113, 123, 133).

8. Système à capteurs multiples selon la revendication 1, **caractérisé en ce que** l'une au moins des unités de capteur (102, 112, 122, 132) comprend un capteur d'imagerie (104, 114, 124, 134).

9. Procédé destiné à un système à capteurs multiples de véhicule comprenant au moins deux unités de capteurs (102, 112, 122, 132), les unités de capteurs (102, 112, 122, 132) comportant chacune au moins un capteur (104, 114, 124, 134), une horloge interne (103, 113, 123, 133) et une unité de commande (105, 115, 125, 135), l'unité de commande (105, 115, 125, 135) étant conçue pour adapter des instants de mesure de l'au moins un capteur (104, 114, 124, 134) sur la base de l'heure de l'horloge interne (103, 113, 123, 133) à des instants cibles spécifiés, et pour recevoir un signal de synchronisation et, sur la base de ce signal de synchronisation, synchroniser l'horloge interne (103, 113, 123, 133), le procédé comprenant les étapes suivantes :

    • recevoir le signal de synchronisation au moyen de l'unité de commande (105, 115, 125, 135),
    • synchroniser l'horloge interne (103, 113, 123, 133), sur la base des informations contenues dans le signal de synchronisation, au moyen de l'unité de commande (105, 115, 125, 135),
    • adapter les instants de mesure de l'au moins un capteur (104, 114, 124, 134) aux instants cibles spécifiés, sur la base de l'heure de l'horloge interne (103, 113, 123, 133), au moyen de l'unité de commande (105, 115, 125, 135).

10. Procédé selon la revendication 9, **caractérisé en ce que** l'adaptation des instants de mesure aux instants cibles spécifiés est effectuée de telle manière que l'unité de commande (105, 115, 125, 135) déclenche les mesures aux instants de mesure, les instants de mesure étant calés sur les instants cibles spécifiés au moyen de l'heure de l'horloge interne (103, 113, 123, 133).

11. Procédé selon la revendication 9, **caractérisé en ce que** les mesures de l'au moins un capteur sont déclenchées avec une fréquence de mesure spécifiée et les instants de mesure sont adaptés à des instants cibles spécifiés au moyen de l'heure de l'horloge interne (103, 113, 123, 133).

12. Procédé selon la revendication 11, **caractérisé en ce que** l'ajustement des instants de mesure aux instants cibles spécifiés est effectué par variation de la fréquence de mesure.

13. Procédé selon la revendication 11 et/ou la revendication 12, **caractérisé en ce que** l'adaptation des instants de mesure aux instants cibles spécifiés est effectuée par retard temporel ou avance temporelle d'au moins un instant de mesure.

Fig. 1

Fig. 2

# Fig. 3

301

302

303

304

305

306

307

308

**IN DER BESCHREIBUNG AUFGEFÜHRTE DOKUMENTE**

**In der Beschreibung aufgeführte Patentdokumente**

- US 20060204038 A
- US 20110187861 A
- DE 102013202320